Europäisches Patentamt

(19) European Patent Office

Office européen des brevets

(11) Publication number: **0 111 835**
**B1**

(12) **EUROPEAN PATENT SPECIFICATION**

(45) Date of publication of patent specification: 29.06.88

(21) Application number: 83112320.3

(22) Date of filing: 07.12.83

(51) Int. Cl.⁴: **H 01 J 23/20,** G 05 D 3/12

(54) Klystron tuning control system.

(30) Priority: **08.12.82 JP 215922/82**

(43) Date of publication of application:
**27.06.84 Bulletin 84/26**

(45) Publication of the grant of the patent:
**29.06.88 Bulletin 88/26**

(84) Designated Contracting States:
**DE FR IT**

(56) References cited:
**IEEE TRANSACTIONS ON ELECTRON DEVICES, vol. ED-29, no. 5, May 1982, pages 932-933, IEEE, New York, US; H. HIRATA et al.: "A high repeatability channel-tuning system for 30-GHz band high-power klystron"**
**PATENTS ABSTRACTS OF JAPAN, vol. 6, no. 99 (E-111)977r, 8th June 1982; & JP - A - 57 32 548 (NIPPON DENKI K.K.) 22-02-1982**
**PATENTS ABSTRACTS OF JAPAN, vol. 6, no. 144 (E-122)1022r, 3rd August 1982; & JP - A - 57 67 264 (NIPPON DENKI K.K.) 23-04-1982**

(73) Proprietor: **NEC CORPORATION**
**33-1, Shiba 5-chome, Minato-ku**
**Tokyo 108 (JP)**

(72) Inventor: **Takeyasu, Yoshiyuki**
**c/o NEC Corporation 33-1, Shiba 5-chome**
**Minato-ku Tokyo (JP)**

(74) Representative: **Vossius & Partner**
**Siebertstrasse 4 P.O. Box 86 07 67**
**D-8000 München 86 (DE)**

## Description

### Background of the invention
#### 1. Field of the invention

The present invention relates to a preset tuner control system for automatically controlling the tuning frequency of a klystron vacuum tube in a radio transmitter system, and more particularly to a circuit for compensating for the backlash of the tuner's tuning mechanism.

#### 2. Description of prior art

Whereas a klystron power amplifier is employed in a transmitter system for use in satellite communication or satellite tracking control, the cavity tuning control of the amplifier necessitated by any change in its transmitting frequency should desirably be accomplished automatically and accurately. Unless this cavity tuning control is properly accomplished, the amplitude vs. frequency characteristics cannot be faithfully reproduced.

Since gears, chains and drive screws are used in the tuning mechanism of a klystron cavity, the presence of minute gaps between these components can essentially invite a backlash. For this reason, a preset tuner of an analog type servo mechanism, which controls the tuning shaft of the klystron with a D.C. motor in the clockwise or counter-clockwise direction as desired, involves the disadvantage that there occurs a deviation corresponding to the backlash between the driving of the tuning shaft of the klystron cavity in the clockwise direction and that in the counter-clockwise direction, resulting in a failure to achieve proper adjustment.

A klystron tuning control apparatus comprising a D.C. motor for positioning the tuning shaft of a klystron, detecting means for electrically detecting the tuning position and control means for tuning the D.C. motor in the forward and backward rotational direction is known from IEEE. (IEEE Transactions on Electron Devices, Volume ED-29, No. 5, May 1982, pages 932—3, IEEE New York.)

It is the object of the present invention to provide a klystron tuning control system to eliminate the adverse effect of backlash on klystron tuning control entailing a frequency change.

The klystron tuning control apparatus according to the invention comprises a D.C. motor for positioning the tuning shaft of a klystron, detecting means for electrically detecting the tuning position and control means for turning the D.C. motor in the forward and backward rotational direction; this apparatus is further characterized by a comparator to compare the output voltage of the detecting means with a reference voltage to provide a coincidence signal when the difference between these voltages is zero, counter means for counting the coincidence signals, means for turning the D.C. motor in the backward rotational direction during a limited time when the counting output is equal to a predetermined number, a timer to limit the time of the backward rotation, and means for turning the D.C. motor, after the backward rotation, in the forward rotational direction till the difference between the output voltage of the detecting means and a reference voltage is zero.

### Brief description of drawings

The features and object of the present invention will be more apparent from the detailed description hereunder taken in conjunction with the accompanying drawings, wherein:

Figure 1 is a block diagram of a klystron tuning control system, which is a first preferred embodiment of the invention; and

Figure 2 is a block diagram of another klystron tuning control system, which is a second preferred embodiment of the invention.

### Preferred embodiments of the invention

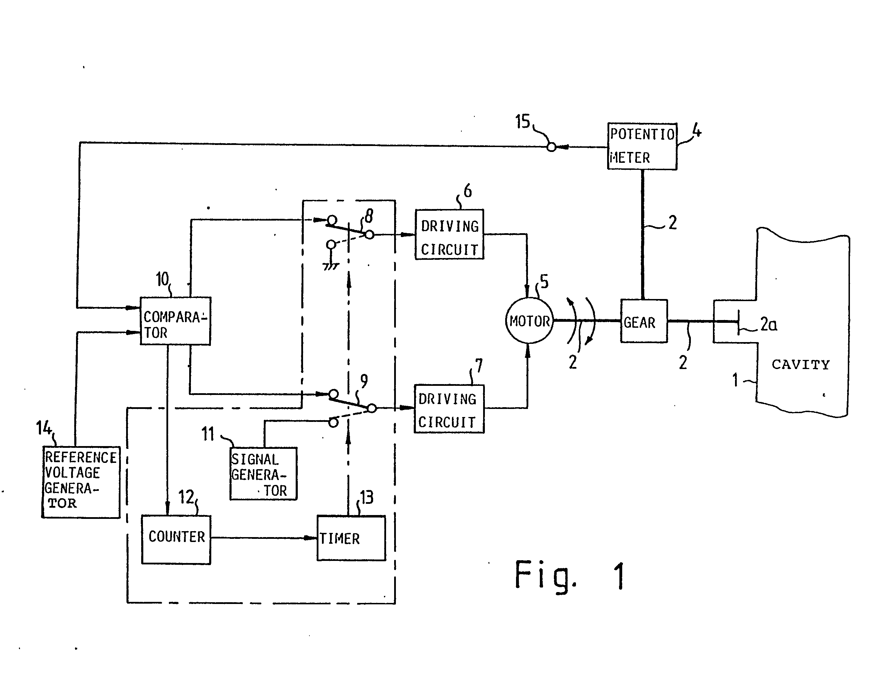

Referring to Figure 1, a klystron cavity 1 is coupled by a tuning shaft 2, having a plunger 2a, to a D.C. motor 5 through a gear 3. The D.C. motor 5 are actuated by driving currents supplied from a clockwise driving circuit 6 and a counter-clockwise driving circuit 7, which are connected to the output of a comparator 10 through switches 8 and 9, respectively. A potentiometer 4 is interlocked with the rotating shaft 2' of the gear 3, and feeds its position-detective voltage to one input of the comparator 10. The output of a reference voltage generator 14 is supplied to the other input of the comparator 10. The coincidence output of the comparator 10 is entered into a counter 12, whose output is supplied to a timer 13 for controlling the switches 8 and 9. One terminal of the switch 8 is grounded, and one terminal of the switch 9 is connected to a signal generator 11.

In the system composed as described above, the switches 8 and 9 are initially set in their respective upper positions in the diagram. The potentiometer 4 is interlocked with the shafts 2 and 2' of the klystron cavity through the gear 3. Therefore the potentiometer 4, whose resistance varies with the tuning position of the cavity, divides a D.C. voltage supplied thereto from a power source (not illustrated), and generates a position-detective voltage at a terminal 15. The comparator 10 compares this position-detective voltage of the potentiometer 4 and the output voltage of the reference voltage generator 14, which generates a voltage corresponding to the intended tuning position, and supplies an error voltage, which is the difference between them, to the clockwise driving circuit 6 of the counter-clockwise driving circuit 7 according to the polarity of the error voltage. The D.C. motor 5 is so turned as to minimize this error voltage.

This analog type servo mechanism tunes the cavity 1 of the klystron to a position where the position-detective voltage of the potentiometer 4 and the reference voltage of the reference voltage generator 14 are equal to each other. If there is a backlash on the gear 3 and the mechanism around it, a deviation will occur in the substantial position of the plunger 2a between the detection of zero by the turn of the D.C. motor 5 in one direction and that by its turn in the other direction.

In the system, the coincidence output of the comparator 10 is fed to the counter 12, which counts how many times this coincidence output is sent out. In this case, when the counter 12 counts the coincidence output two times, for example, it supplies a trigger output to the timer 13, and at the same time resets itself. As a result the timer 13 changes over the switches 8 and 9 to their respective lower positions as indicated in the dotted lines in Figure 1 and keeps them there only for a predetermined short period of time. Therefore, only during this short period of time, a control signal is fed to the counter-clockwise driving circuit 7 from the signal generator 11.

This action forcibly turns the D.C. motor 5 a little in the counter-clockwise direction to return the switches 8 and 9 to their respective upper positions in the diagram. After that is resumed the control to reduce the error voltage to zero. Thus, as the adjustment is only in the clockwise direction, any backlash that may occur is in a fixed direction and will have no adverse effect. Therefore, the frequency can be measured and set always on the basis of adjustment in this fixed direction.

The active period of the timer 13 should desirably minimized within the extent that any vibration may not occur from the control system, in other words, that the control system stably operates. The switches 8 and 9 may comprise transistor switches.

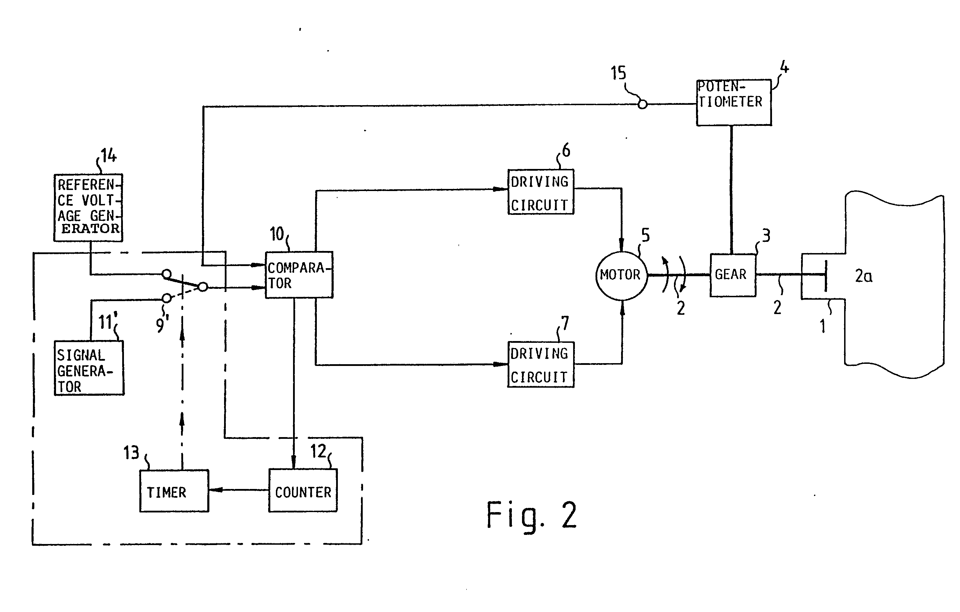

Figure 2 illustrates a second embodiment of the tuning control system according to the present invention, which is featured by the arrangement that a switch 9' is provided on the input side of the comparator circuit 10 so that, when a counter-clockwise turn is to be forcibly given, the reference input voltage of the comparator 10 be altered. That is, the switch 9 connects either of the generator 14 and a signal generator 11' to the comparator 10 in response to the output of the timer 13. Since this embodiment is similar in other respects to the first embodiment illustrated in Figure 1, further details are dispensed with herein.

As hitherto described in detail, according to the present invention, the cavity of a klystron is turned always in only one direction. Accordingly, any backlash of the gear that may arise owing to the rotational direction of the tuning shaft will have no adverse effect, and the amplitude vs. frequency characteristic of the klystron can be faithfully reproduced.

## Claim

A klystron tuning control apparatus comprising a D.C. motor (5) for positioning the tuning shaft (2) of a klystron, detecting means (4) for electrically detecting the tuning position and control means (6, 7) for turning the D.C. motor (5) in the forward and backward rotational direction characterized by

(a) a comparator (10) to compare the output voltage of the detecting means (4) with a reference voltage to provide a coincidence signal when the difference between these voltages is zero,

(b) counter means (12) for counting the coincidence signals,

(c) means (8, 9, 11) for turning the D.C. motor (5) in the backward rotational direction during a limited time when the counting output is equal to a predetermined number,

(d) a timer (13) to limit the time of the backward rotation, and

(e) means (8, 9, 10) for turning the DC-motor (5), after the backward rotation, in the forward rotational direction till the difference between the output voltage of the detecting means and a reference voltage is zero.

## Patentanspruch

Steuerungsvorrichtung zum Abstimmen eines Klystrons mit einem Gleichstrommotor (5) zum Einstellen der Abstimmwelle (2) eines Klystrons, einem Detektor (4) zum elektrischen Ermitteln der Abstimmstellung und mit einer Steuereinrichtung (6, 7) zum Drehen des Gleichstrommotors (5) in Vorwärts- und Rückwärtsrichtung, gekennzeichnet durch

a) einen Vergleicher (10) zum Vergleichen der Ausgangsspannung des Detektors (4) mit einer Bezugsspannung zum Erzeugen eines Koinzidenzsignals, wenn die Differenz zwischen diesen Spannungen Null ist,

b) einen Zähler (12) zum Zählen der Koinzidenzsignale,

c) eine Einrichtung (8, 9, 11) zum Drehen des Gleichstrommotors (5) in Rückwärtsdrehrichtung während eines begrenzten Zeitraumes, wenn der Zählerausgang gleich einer vorgegebenen Zahl ist,

d) einen Zeitgeber (13) zum Begrenzen des Zeitraums für die Rückwärtsdrehbewegung und durch

e) eine Einrichtung (8, 9, 10) zum Drehen des Gleichstrommotors (5) nach der Rückwärtsdrehbewegung in Vorwärtsdrehrichtung bis die Differenz zwischen den Ausgangsspannung des Detektors und einer Bezugsspannung Null ist.

## Revendication

Appareil pour la commande de l'accord d'un klystron comprenant un moteur à courant continu (5) pour positionner l'arbre d'accord (2) d'un klystron, un moyen de détection (4) pour détecter électriquement la position d'accord et un moyen de commande (6, 7) pour faire tourner le moteur à courant continu (5) dans les sens de rotation avant et arrière, caractérisé par:

(a) un comparateur (10) pour comparer la tension de sortie du moyen de détection (4) à une tension de référence afin de fournir un signal.de coïncidence lorsque la différence entre ces tensions est nulle;

(b) un moyen de compteur (12) pour compter les signaux de coïncidence,

(c) un moyen (8, 9, 11) pour faire tourner le moteur à courant continu (5) dans le sens de rotation arrière pendant une durée limitée lorsque la sortie de comptage est égale à un nombre prédéterminé;

(d) une minuterie (13) pour limiter la durée de la rotation vers l'arrière; et

(e) un moyen (8, 9, 10) pour faire tourner le moteur à courant continu (5) après la rotation dans le sens arrière, dans le sens de rotation avant jusqu'à ce que la différence entre la tension de sortie du moyen de détection et une tension de référence soit nulle.

Fig. 1

Fig. 2

0 111 835